# EUROPÄISCHE PATENTSCHRIFT

(11) **EP 1 707 863 B1**
(45) Veröffentlichungstag und Bekanntmachung des Hinweises auf die Patenterteilung: **23.07.2008**
(21) Anmeldenummer: 06111915.2
(22) Anmeldetag: 29.03.2006
(51) Int. Cl.: F16L 37/34, F16L 37/413

(54) **Kupplungsteil einer Druckmittel-Steckkupplung**
Coupling piece for a plug coupling for pressurized fluid
Pièce de raccord pour un raccord enfichable pour fluide sous pression

(30) Priorität: 30.03.2005 DE 202005004995 U
(43) Veröffentlichungstag der Anmeldung: 04.10.2006
(73) Patentinhaber: Voswinkel KG, 58540 Meinerzhagen (DE)
(72) Erfinder: Hartmann, Jürgen, 58339, Breckerfeld (DE); Firus, Artur, 58638, Iserlohn (DE)
(74) Vertreter: Patentanwälte Dr. Solf & Zapf

(56) Entgegenhaltungen:
- EP-A- 0 814 293
- EP-A- 1 353 109
- DE-A1- 3 509 371
- DE-A1- 3 904 098
- DE-A1- 4 101 001
- GB-A- 898 955
- US-A- 6 024 124
- US-B1- 6 283 151
- US-B1- 6 382 251

## Beschreibung

Die vorliegende Erfindung betrifft einen Kupplungsstecker einer - aus zwei zusammensteckbaren und sich dabei selbsttätig gegenseitig öffnende Hauptventile aufweisenden Kupplungsteilen bestehenden - Druckmittel-Steckkuppiung, und zwar speziell einen drucknehmerseitigen Kupplungsstecker zum Einstecken in eine druckgeberseitige Kupplungsmuffe, mit einer mit der Kupplungsmuffe kuppelbaren Kupplungsseite und einer gegenüberliegenden Leitungsseite, wobei das Hauptventil in einer Schließstellung einen Strömungskanal zur Kupplungsseite hin druckdicht gegen einen eventuellen, leitungsseitigen Restdruck verschließt und in einer Öffnungsstellung den Strömungskanal öffnet, wozu das Hauptventil einen mit einem Ventilsitz zusammenwirkenden und derart entsprechend einer Steckachse axialbeweglich in einem Ventilgehäuse geführten Ventilkörper aufweist, dass dieser beim Kuppelvorgang aus der Schließstellung selbsttätig in die von dem Ventilsitz abgehobene Öffnungsstellung gebracht wird. Eine solche Ausführung ist z.B. in der DE 39 04 098 A1 beschrieben.

Der Begriff "Nehmerseite" bezeichnet die Seite eines Druckmittel-Verbrauchers (Aggregates), und der Begriff "Geberseite" bedeutet die Seite einer den Druck des Druckmittels, insbesondere Hydraulikmediums, aufbauenden Pumpe.

Bekannte Hydraulik-Kupplungen, beispielsweise genormte Ausführungen gemäß ISO 5675 in Verbindung mit ISO 7241-1 und -2 sowie SAE J 1036, bestehen aus einem Steckerventil und einem Muffenventil, wobei üblicherweise das Steckeventil nehmerseitig (aggregatseitig) und das Muffenventil geberseitig (pumpenseitig) angeordnet werden. In der üblichen SchnellverschlußausfCihrung wird das Steckerventil in seiner umfänglich abgedichtet in das Muffenteil eingesteckten Kupplungslage über eine Verriegelungseinrichtung lösbar verriegelt. In dieser Kupplungslage öffnen sich die Hauptventile gegenseitig durch direkten stirnseitigen Kontakt der entsprechenden Ventilkörper von Stecker- und Muffenventil. Dies bedeutet, dass beim Einstecken des Steckerventils in das Muffenventil sowohl der Muffen- Ventilkörper als auch der Stecker-Ventilkörper aufgedrückt werden müssen.

Dies ist jedoch manuell nur dann möglich, wenn beide Seiten im Wesentlichen drucklos sind. Oft ist aber vor allem nehmerseitig ein Restdruck vorhanden, der beispielsweise durch einen mit einer statischen Last belasteten Hydraulikzylinder oder durch einen bei Temperaturanstieg auftretenden Druckanstieg derart hoch sein kann (bis zu 200 bar und mehr), dass ein Öffnen des nehmerseitigen Ventils gegen die sehr hohe, den Ventilkörper beaufschlagende, hydraulisch bedingte Schließkraft manuell nicht möglich ist.

Es sind deshalb im Stand der Technik verschiedenartige Maßnahmen bekannt, um auch bei einem vorhandenen Restdruck ein manuelles Kuppeln zu ermöglichen.

So beschreibt die DE-OS-35 09 371 eine "unter Druck kuppelbare" Muffe (UDK-Muffe), deren Ventilkörper gegenüber dem Stecker-Ventilkörper um den doppelten Ventilhub beweglich ist, so dass das Steckerventil beim Kuppeln zunächst geschlossen bleiben kann. Ein Öffnen erfolgt dann erst durch geberseitigen Druckaufbau, und zwar wenn der geberseitige Druck etwa dem nehmerseitigen Restdruck entspricht. Derartige UDK-Muffenventile sind aber konstruktiv sehr aufwendig und damit teuer, zumal zusätzliche Sperrmittel erforderlich sind, die im Betriebszustand mechanisch oder hydraulisch den doppelten Ventilhub auf den einfachen Hub begrenzen, damit die Kupplung im 13etrieb bei einer Hydraulik-Rückströmung nicht ungewollt schließen kann. Die höheren Kosten für die UDK-Ausführung machen sich insbesondere deshalb nachteilig bemerkbar, da es sich bei den betreffenden Hydraulik-Kupplungen um Massenartikel handelt, die in sehr großen Stückzahlen bei hydraulischen Anlagen und Aggregaten aller Art, wie beispielsweise bei Land- und Baumaschinen, eingesetzt werden.

Es ist weiterhin bekannt (vgl. beispielsweise die EP 1 353 109 A2 und die DE 41 01 001 C2), in mindestens eines der Kupplungsteile ein Druckentlastungsventil zu integrieren. Dadurch wird beim Kuppeln zunächst bei noch geschlossenem, da druckbedingt nicht zu öffnendem Hauptventil das Druckentlastungsventil kurz geöffnet, bis sich der Restdruck durch Abfließen eines Teils des Druckmittels soweit abgebaut hat, bis das zum Einkuppeln notwendige Öffnen des Hauptventils möglich ist und so das Einkuppeln bis zur Verriegelung erfolgen kann. Das zusätzliche Druckentlastungsventil führt ebenfalls zu einem konstruktiv und wirtschaftlich hohen Aufwand.

Die DE 196 24 365 C1 bzw. die Korrespondierende EP 0 814 293 A1 beschreibt einen Kupplungsstecker, dessen Ventilkörper innerhalb des Ventilgehäuses derart gegen eine Druckmittel-Beaufschlagung geschützt angeordnet ist, dass er im geschlossenen Zustand frei von druckbedingten, in axialer Richtung wirkenden Kräften gelagert ist. Dazu ist der Ventilkörper mit einem sich axial in zur Steckrichtung entgegengesetzter Richtung erstreckenden Ventilschaft umfangsgemäß abgedichtet innerhalb eines Abschirmelementes geführt, wobei der Raum innerhalb des Abschirmelementes stets mindestens nahezu drucklos ist. Auch diese Ausführung führt zu einem recht hohem Aufwand, weil der Ventilkörper mit seinem Ventilschaft mittelbar über einen axialbeweglich geführten, ringförmigen Zwischenkolben in dem Abschirmelement geführt ist, wobei der Zwischenkolben ein zusätzliches, schieberartiges Verschlusselement für den Druckmittel-Strömungsweg bildet. Einen ähnlichen Stecker beschreibt auch die US-A-6 024 124.

Der vorliegenden Erfindung liegt die Aufgabe zugrunde, einen Kupplungsstecker der genannten Art zu schaffen, welcher mit konstruktiv einfachen und wirtschaftlichen Mitteln ein manuelles Kuppeln auch unter einem Restdruck von vorzugsweise bis zu 300 bar ermöglicht.

Erfindungsgemäß wird diese Aufgabe durch die Merkmale des Anspruchs 1 gelöst. Vorteilhafte Ausgestaltungen der Erfindung sind in den abhängigen Ansprüchen enthalten.

Erfindungsgemäß ist somit der Ventilkörper als ein hülsenförmiger, den Strömungskanal umschließender Hohlkörper mit einer in der Schließstellung axial in Schließrichtung mit dem Restdruck beaufschlagbaren, derart klein ausgelegten Druckfläche ausgebildet, dass bis zu einem maximalen Restdruck von bis zu etwa 300 bar der Venti:körper durch manuelles Kuppeln aus der Schließstellung gegen den jeweiligen Restdruck und gegen eine daraus durch Beaufschlagung der Druckfläche resultierende Ventilkraft in die Öffnungsstellung bringbar ist.

Durch die erfindungsgemäße HÜlsenform des Ventilkörpers kann die kreisringförmig ausgebildete Druckfläche bei großem Strömungsquerschnitt (großer Nennweite) des Strömungskanals vorteilhafterweise relativ klein ausgelegt sein. Daraus resultien nach der Gleichung F = p • A auch eine vorteilhaft kleine Ventilkraft, die ein manuelles Kuppeln trotz eines eventuell vorhandenen Restdruckes von bis zu 300 bar möglich macht. Hierbei wird nach der genannten Beziehung F = p • A die Druckfläche so bemessen, dass die Ventilkraft zur manuellen Kuppelbarkeit nicht größer als 700 N ist.

Durch diese erfindungsgemäße Ausgestaltung erübrigen sich vorteilhafterweise zusätzliche, aufwendige Maßnahmen. Vielmehr kann der Ventilkörper allein durch seine Ausgestaltung mit relativ kleiner Druckfläche auch gegen den Restdruck in die Öffnungsstellung bewegt werden.

Im Folgenden soll die Erfindung anhand von in den Zeichnungen veranschaulichten, bevorzugten Ausführungsbeispielen genauer erläutert werden. Dabei zeigen:
- Fig. 1 bis 4: jeweils eine erste Ausführung eines erfindungsgemäßen Kupplungssteckers zusammenmit einer zugehörigen Kupplungsmuffe in Halb-Axialschnittdarstellung und in verschiedenen Stellungen während des Kuppelvorganges,
- Fig.5: eine zweite, speziell ausgestaltete Ausführung des erfindungsgemäßen Kupplungssteckers im Tell-Axialschnitt.

In den verschiedenen Zeichnungsfiguren sind gleiche Teile stets mit den selben Bezugszeichen versehen und werden daher in Regel auch jeweils nur einmal beschrieben.

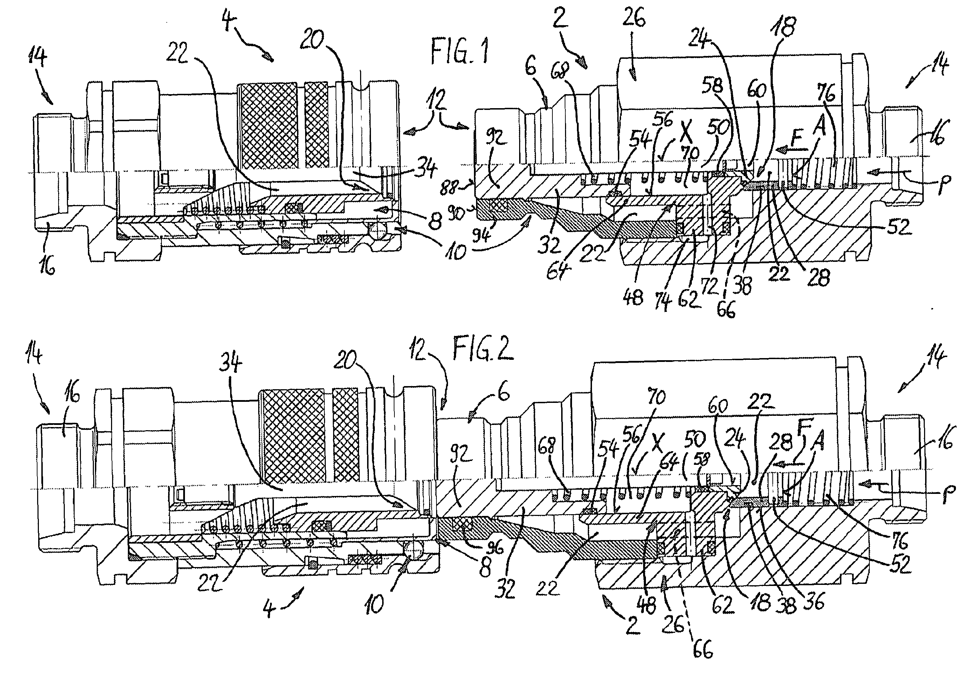

Eine in den Fig. 1 bis 4 dargestellte Druckmittel-Steckkupplung, insbesondere Hydraulik-Kupplung, ist als Schnellverschlusskupplung mit an sich bekannter Kugelarretierung ausgebildet und besteht aus einem Kupplungsstecker 2 und einer Kupplungsmuffe 4. Üblicherweise werden der Kupplungsstecker 2 auf der Seite eines Verbrauchers bzw. Aggregates (Nehmerseite) und die Kupplungsmuffe 4 auf der Seite einer Druckmittelpumpe (Geberseite) angeordnet. Bei bestimmten Anwendungen, wobei (auch) auf der Geberseite ein Restdruck im Hydrauliksystem besteht, kann der Kupplungsstecker 2 alternativ auch auf der Geberseite eingesetzt werden.

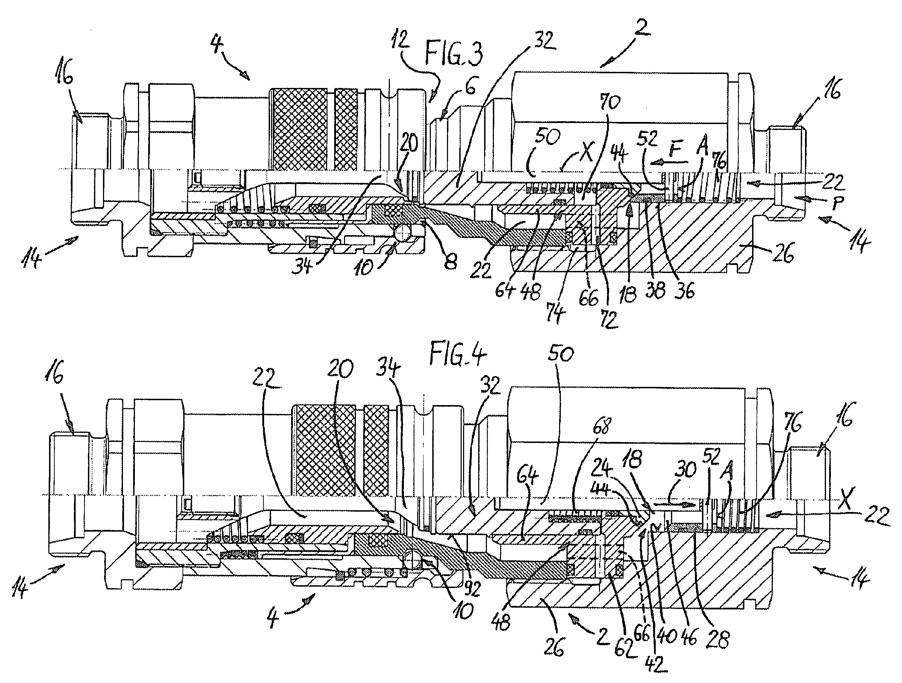

Der Kupplungsstecker 2 ist mit einem Steckabschnitt 6 in eine Aufnahmeöffnung 8 der Kupplungsmuffe 4 einsteckbar und in der in Fig. 4 veranschaulichten Kupplungslage insbesondere durch eine Sperrkugel-Verriegelungseinrichtung 10 verriegelt. Die Einzelheiten dieser Verriegelung sind Stand der Technik und bedürften daher <einer weiteren Erläuterung.

Jedes Kupplungsteil 2, 4 weist eine mit dem jeweils anderen Kupplungsteil 4, 2 zusammensteckbare Kupplungsseite 12 und axial gegenüberliegend eine Leitungsseite 14 mit einem Druckmittelanschluss 16 für jeweils eine nicht dargestellte Druckleitung auf.

Jedes Kupplungsteil 2, 4 weist ein inneres Hauptventil 18 bzw. 20 auf, welches zum Absperren bzw. Öffnen eines Strömungskanals 22 zwischen der Leitungsseite 14 und der Kupplungsseite 12 angeordnet ist.

Die vorliegende Erfindung betrifft speziell den nehmerseitigen Kupplungsstecker 2. Deshalb wird im Folgenden schwerpunktmäßig der Kupplungsstecker 2 genauer beschrieben. Das Hauptventil 18 verschließt in einer Schließstellung (Fig. 1 bis 3 sowie Fig. 5) den Strömungskanal 22 zur Kupplungsseite 12 hin druckdicht gegen einen eventuellen, von der Leitungsseite 14 anstehenden Restdruck p. In einer Öffnungsstellung (nur Fig. 4) öffnet das Hauptventil 18 den Strömungskanal 22. Dazu weist das Hauptventil 18 einen mit einem Ventilsitz 24 zusammenwirkenden und derart entsprechend einer Steckachse X axialbeweglich in einem Ventilgehäuse 26 geführten Ventilkörper 28 auf, dass letzterer beim Kuppelvorgang, d. h. beim Zusammenstecken beider Kupplungsteile 2, 4, aus der Schließstellung selbsttätig in die von dem Ventilsitz 24 abgehobene Öffnungsstellung gebracht wird (siehe den Pfeil 30 in Fig. 4). Dazu wirkt der Ventilkörper 28 mit einem Ventilstößel 32 zusammen, der in dem Ventilgehäuse 26 derart axial verschiebbar geführt ist, dass er beim Kuppelvorgang durch Anlage an einem innerhalb des anderen Kupplungsteils, der Muffe 4, ortsfest (unbeweglich) angeordneten Gegenstößel 34 selbsttätig in das Ventilgehäuse 26 hineingeschoben wird und zum Öffnen gegen das Ventilelement 28 wirkt.

Wenn nun bei geschlossenem Hauptventil 18 auf der Leitungsseite 14 noch ein nehmerseitiger Restdruck p ansteht, so beaufschlagt dieser das Ventilelement 28 in Schließrichtung, so dass eine druckabhängige Schließkraft F erzeugt wird, die beim Kuppeln zum Öffnen des Hauptventils 18 überwunden werden muss. In der Praxis kann der Restdruck p mit Werten bis über 200 bar sehr hoch sein, so dass ein manuelles Kuppeln nicht ohne Weiteres möglich ist.

Diesbezüglich ist nun erfindungsgemäß vorgesehen, dass der Ventilkörper 28 als ein hülsenförmiger, den Strömungskanal 22 umschließender Hohlkörper mit einer in der Schließstellung axial in Schließrichtung mit dem Restdruck p beaufschlagbaren und erfindungsgemäß derart klein ausgelegten Druckfläche A ausgebildet ist, dass bis zu einem maximalen Restdruck pₘₐₓ von bis zu etwa 300 bar der Ventilkörper 28 durch allein manuelles Kuppeln der Kupplungsteile 2, 4 aus der Schließstellung gegen den jeweiligen Restdruck p und gegen eine daraus durch Beaufschlagung der Druckfläche A nach der Gleichung F = p • A resultierende Ventilkraft F in die Öffnungsstellung bringbar ist.

Der hülsenförmige Ventilkörper 28 ist mit seiner äußeren Umfangsfläche 36 über eine Umfangsdichtung 38 abgedichtet in einer inneren Führungsfläche 40 (siehe Fig. 4) des Ventilgehäuses 26 geführt. Zwischen der Führungsfläche 40 und dem Ventilsitz 24 ist ein ringförmiger Strömungsdurchlass 42 als Teil des StrÖmungskanals 22 gebildet, wobei der Strömungsdurchlass 42 von dem Ventilkörper 28 schieberartig geschlossen oder geöffnet wird. Der Ventilsitz 24 ist als Ventilkegel mit einer Dichtung 44 ausgebildet. Der Ventilkörper 28 weist in Anpassung an den Ventilkegel eine innere Konusdichtfläche 46 auf (Fig. 4), die in der Dichtstellung mit der Dichtung 44 des Ventilsitzes 24 zusammenwirkt. Der Ventilsitz 24 ist Teil eines in dem Ventilgehäuse 26 ortsfest gelagerten Führungselementes 48, in dem der Ventilstößel 32 axial verschiebbar geführt ist.

Der Ventilstößel 32 wirkt über einen im Querschnitt reduzierten Stößelstift 50 gegen den Ventilkörper 28. Allerdings ist hierbei ausgehend von der Ausgangsstellung gemäß Fig. 1 zunächst ein axialer "Freiweg" gewährleistet, über den hinweg der Stößeistift 50 noch nicht gegen das Ventilelement 28 wirkt. Innerhalb dieses Freiweges wird erst eine Abdichtung zwischen den beiden Kupplungsteilen 2 und 4 hergestellt und der Strömungskanal 22 wird in Richtung des anderen Kupplungsteils 4 geöffnet. Zur Anlage für den Stößelstift 50 weist der hülsenförmige Ventilkörper 28 in seinem Inneren ein Mitnehmerelement 52 derart auf, dass ein Durchlass als Strömungskanal 22 verbleibt. Bevorzugt ist das Mitnehmerelement 52 - wie dargestellt - von einem sich diametral durch den Strömungskanal 22 und den Innenraum des Ventilkörpers 28 erstreckender Querstift gebildet.

Der Ventilstößel 32 ist umfangsgemäß über eine Dichtung 54 abgedichtet in einer Führungsfläche 56 des Führungselementes 48 geführt. Der Stößelstift 50 ist umfangsgemäß über eine Dichtung 58 abgedichtet durch eine axiale Öffnung 60 des Führungselementes 48 hindurch über den Bereich des Ventilsitzes 24 hinaus gegen den Ventilkörper 28 bewegbar. Im Falle eines vorhandenen Restdruckes p wird somit auch der Stößelstift 50 mit diesem Druck beaufschlagt. Durch die beschriebene erfindungsgemäße Ausgestaltung kann allerdings die druckbeaufschlagte Fläche des Stößelstiftes 50 derart klein gehalten werden, dass auch nur eine kleine zusätzliche, beim Kuppelvorgang zu überwindende Kraft entsteht.

Das Führungselement 48 weist einen trennwandartigen, zu beiden Axialseiten hin abgedichtet in dem Ventilgehäuse 26 sitzenden Basisabschnitt 62 auf. Dieser Basisabschnitt 62 geht einerseits zur Kupplungsseite 12 hin in einen Führungshülsenabschnitt 64 für den Ventilstößel 32 über und weist andererseits zur Leitungsseite 14 hin den Ventilsitz 24 auf. Zur Montage des Führungselementes 48 ist das Ventilgehäuse 26 zumindest zweiteilig ausgebildet, wobei der Basisabschnitt 62 über beidseitige Dichtungen axial zwischen zwei Gehäuseteilen eingespannt sitzt. Die beiden Gehäuseteile sind bevorzugt miteinander verschraubt. Radial zwischen dem Führungshülsenabschnitt 64 und dem Ventilgehäuse 26 ist ein Ringkanal als Teil des StrÖmungskanals 22 gebildet. Dabei weist der Basisabschnitt 62 axiale Strömungsöffnungen 66 ebenfalls als Teil des Strömungskanals 22 zur Verbindung zwischen dem den Führungshütsenabschnitt 64 umschließenden Ringkanal und dem Ventil-Strömungsdurchlass 42 auf.

Der Ventilstößel 32 ist in Schließrichtung mit der Kraft einer Rücksteilfeder 68 beaufschlagt, die in einer zwischen dem Ventilstößel 32 und dem Führungselement 48 gebildeten Innenkammer 70 angeordnet ist und hier den Stößelstift 50 koaxial umschließt. Hierbei ist die Innenkammer 70 über mindestens eine Queröffnung 72 des Führungselementes 48 und eine Passage 74 des Ventilgehäuses 26 mit der Außenumgebung (Atmosphäre) verbunden, d. h. belüftet. Hierdurch läßt sich der Ventilstößel 32 leicht gegen die Kraft der Rückstellfeder 68 bis zur Anlage des Stößelstiftes 50 am Ventilkörper 28 bewegen, da ein federndes Luftpolster innerhalb der Innenkammer 70 vermieden wird.

Auch der Ventilkörper 28 ist in Schließrichtung mit der Kraft einer Schließfeder 76 beaufschlagt, die zwischen dem Ventilkörper 28 und einer gehäuseseitigen Ringstufe sitzt.

In der ersten Ausführungsform gemäß Fig. 1 bis 4 ist der Ventilkörper 28 mit besonders einfacher Form als Hohlzylinder ausgebildet. Dabei bildet seine hintere Stirnringfläche die vom Restdruck p beaufschlagbare Druckfläche A.

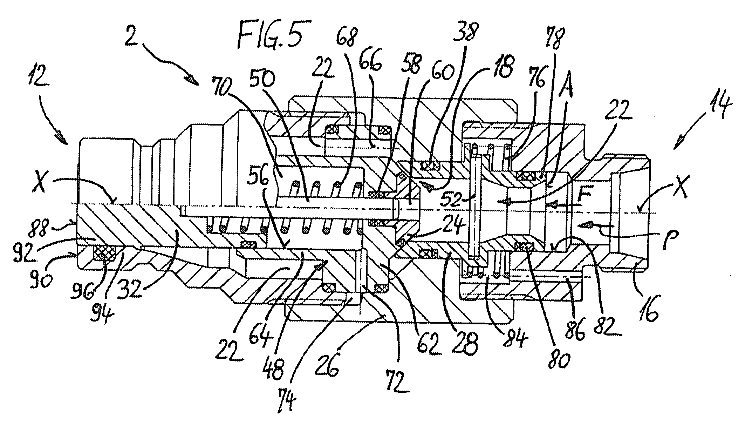

In einer in Fig. 5 veranschaulichten, vorteilhaften Weiterbildung weist der Ventilkörper 28 auf seiner von dem Ventilsitz 24 weg- und zur Leitungsseite 14 hinweisenden Seite einen im äußeren sowie inneren Durchmesser reduzierten Hülsenabschnitt 78 auf, der umfangsgemäß über eine zweite Umfangsdichtung 80 abgedichtet in einer zweiten inneren Führungsfläche 82 des Ventilgehäuses 26 geführt ist. Durch diese Maßnahme wird eine weitere Reduzierung der druckbeaufschlagten Druckfläche A trotz großer Nennweite, d. h. großem Strömungsquerschnitt im Bereich des Ventil-Strömungsdurchlasses 42, erreicht. In einem axial zwischen der ersten Umfangsdichtung 38 des Ventilkörpers 28 und der zweiten Umfangsdichtung 80 des Hülsenabschnittes 78 liegenden Bereich ist ein den Ventilkörper 28 umschließender Ringraum 84 gebildet, der über mindestens eine Gehäuseöffnung 86 mit der Atmosphäre verbunden (belüftet) ist. Bevorzugt ist in diesem Ringraum 84 auch die Schließfeder 76 untergebracht.

Durch die Erfindung kann die jeweils von einem eventuellen Restdruck p beaufschlagbare Gesamtfläche derart klein ausgelegt sein, dass die daraus nach der Gleichung F = p • A resultierende und beim Kuppeln zu überwindende Kraft ein allein manuelles Kuppeln ohne zusätzliche Hilfsmittel ermöglicht. Bei einem allein manuellen Kuppeln kann eine maximale Kraft Fₘₐₓ von bis zu 700 N überwunden werden. Daraus läßt sich die Auslegung der Flächenverhältnisse ermitteln.

Abschließend sei noch erwähnt, dass die Kupplungsteile 2, 4 bevorzugt in einer sogenannten Flachdichtausführung ausgebildet sind. Der Ventilstößel 32 des Kupplungssteckers 2 weist auf der Kupplungsseite 12 eine ebene, zur Steckachse X senkrechte Stirnfläche 88 auf, die in der entkuppelten Schließstellung etwa in einer Ebene mit einer konzentrischen Stirnringfläche 90 des Ventilgehäuses 26 liegt (siehe Fig. 1 und 5). Der Ventilstößel 32 weist im Anschluss an die ebene Stirnfläche 88 einen zylindrischen Dichtabschnitt 92 auf, der in der Schließstellung mit einem korrespondierenden Dichtbereich 94 des Ventilgehäuses 26 über eine RadialdiciltLing 96 zusammenwirkt. Die Radialdichtung 96 ist in einer inneren Ringnut des Ventilgehäuses 26 im Dichtbereich 94 angeordnet. Somit ist hier eine Art "Vorventil" gebildet, welches beim Kuppeln erst durch den oben beschriebenen Freiweg des Ventilstößels 32 geöffnet wird, bevor das Hauptventil 18 öffnet.

## Patentansprüche

1. Kupplungsstecker (2) einer - aus zwei zusammensteckbaren und sich dabei selbsttätig gegenseitig öffnende Hauptventile (18, 20) aufweisenden Kupplungsteilen (2,4) bestehenden Druckmittel-Steckkupplung, und zwar drucknehmerseitiger Kupplungsstecker (2) zum Einstecken in eine druckgeberseitige Kupplungsmuffe (4), mit einer mit der Kupplungsmuffe (4) kuppelbaren Kupplungsseite (12) und einer gegenüberliegenden Leitungsseite (14), wobei das Hauptventil (18) in einer Schließstellung einen Strömungskanal (22) zur Kupplungsseite (12) hin druckdicht gegen einen eventuellen leitungsseitigen Restdruck (p) verschließt und in einer Öffnungsstellung den Strömungskanal (22) öffnet, wozu das Hauptventil (18) einen mit einem Ventilsitz (24) zusammenwirkenden und derart entsprechend einer Steckachse (X) axialbeweglich in einem Ventilgehäuse (26) geführten Ventilkörper (28) aufweist, dass dieser beim Kuppelvorgang aus der Schließstellung selbsttätig in die von dem Ventilsitz (24) abgehobene Öffnungsstellung gebracht wird,
**dadurch gekennzeichnet, dass** der Ventilkörper (28) als ein hülsenförmiger, den Strömungskanal (22) umschließender Hohlkörper mit einer in der Schließstellung axial in Schließrichtung mit dem Restdruck (p) beaufschlagbaren, derart klein ausgelegten Druckfläche (A) ausgebildet ist, dass bis zu einem maximalen Restdruck (pₘₐₓ) von bis zu etwa 300 bar der Ventilkörper (28) durch manuelles Kuppeln aus der Schließstellung gegen den jeweiligen Restdruck (p) und gegen eine daraus durch Beaufschlagung der Druckfläche (A) resultierende Ventilkraft (F) in die Öffnungsstellung bringbar ist,
wobei der Ventilkörper (28) mit einer äußeren Umfangsfläche (36) über eine Umfangsdichtung (38) abgedichtet in einer inneren Führungsfläche (40) des Ventilgehäuses (26) geführt ist, wobei zwischen der Führungsfläche (40) und dem Ventilsitz (24) ein Strömungsdurchlass (42) gebildet ist, der von dem Ventilkörper (28) schieberartig geschlossen oder geöffnet wird, und wobei der Ventilsitz (24) Teil eines in dem Ventilgehäuse (26) ortsfest angeordneten Führungselementes (48) ist, in dem ein Ventilstößel (38) derart axial verschiebbar geführt ist, dass er beim Kuppelvorgang selbsttätig in das Ventilgehäuse (26) hineingeschoben wird und zum Öffnen gegen den Ventilkörper (28) wirkt.

2. Kupplungsstecker nach Anspruch 1,
**dadurch gekennzeichnet, dass** der Ventilstößel (32) über einen im Querschnitt reduzierten Stößelstift (50) gegen das Ventilelement (28) wirkt.

3. Kupplungsstecker nach Anspruch 2,
**dadurch gekennzeichnet, dass** der hülsenförmige Ventilkörper (28) in seinem Inneren ein Mitnehmerelement (52) zur Anlage für den Stößelstift (50) aufweist.

4. Kupplungsstecker nach Anspruch 3,
**dadurch gekennzeichnet, dass** dasMitnehmerelement(52)von einem sich diametral erstreckenden Querstift gebildet ist.

5. Kupplungsstecker nach einem der Ansprüche 2 bis 4,
**dadurch gekennzeichnet, dass** der Ventilstößel (32) umfangsgemäß abgedichtet in einer Führungsfläche (56) des Führungselementes (48) geführt ist, wobei der Stößelstift (50) umfangsgemäß abgedichtet durch eine axiale Öffnung (60) des Führungselementes (48) hindurch über den Bereich des Ventilsitzes (24) hinaus gegen den Ventilkörper (28) bewegbar ist.

6. Kupplungsstecker nach einem der Ansprüche 1 bis 5,
**dadurch gekennzeichnet, dass** das Führungselement (48) einen trennwandartigen, zu beiden Axialseiten hin abgedichtet in dem Ventilgehäuse (26) sitzenden Basisabschnitt (62) aufweist, der einerseits zur Kupplungsseite (12) hin in einen Führungshülsenabschnitt (64) für den Ventilstößel (32) übergeht und andererseits zur Leitungsseite (14) hin den Ventilsitz (24) aufweist.

7. Kupplungsstecker nach Anspruch 6,
**dadurch gekennzeichnet, dass** radial zwischen dem Führungshülsenabschnitt (64) und dem Ventilgehäuse (26) ein Ringkanal als Teil des Strömungskanals (22) gebildet ist, wobei der Basisabschnitt (62) axiale Strömungsöffnungen (66) zur Verbindung zwischen dem Ringkanal und dem Ventil-Strömungsdurchlass (42) aufweist.

8. Kupplungsstecker nach einem der Ansprüche 2 bis 7,
**dadurch gekennzeichnet,dass** in einer zwischen dem Ventilstößel (32) und dem Führungselement (48) gebildeten Innenkammer (70) eine Rückstellfeder (68) angeordnet ist.

9. Kupplungsstecker nach Anspruch 8,
**dadurch gekennzeichnet, dass** die innenkammer (70) über mindestens eine Queröffnung (72) des Führungselementes (48) und eine Passage (74) des Ventilgehäuses (26) mit der Atmosphäre verbunden ist.

10. Kupplungsstecker nach einem der Ansprüche 1 bis 9,
**dadurch gekennzeichnet, dass** der Ventilkörper (28) in Schließrichtung von einer Schließfeder (76) beaufschlagt ist.

11. Kupplungsstecker nach einem der Ansprüche 1 bis 10,
**dadurch gekennzeichnet, dass** der Ventilkörper (28) auf seiner von dem Ventilsitz (24) wegweisenden Seite einen im äußeren und inneren Durchmesser reduzierten Hülsenabschnitt (78) aufweist, der umfangsgemäß über eine zweite Umfangsdichtung (80) abgedichtet in einer zweiten inneren Führungsfläche (82) des Ventilgehäuses (26) geführt ist.

12. Kupplungsstecker nach Anspruch 11,
**dadurch gekennzeichnet, dass** im axial zwischen der ersten Umfangsdichtung (38) des Ventilkörpers (28) und der zweiten Umfangsdichtung (80) des Hülsenabschnittes (78) liegenden Bereich ein den Ventilkörper (28) umschließender Ringraum (84) gebildet ist, der mit der Atmosphäre verbunden ist.

13. Kupplungsstecker nach einem der Ansprüche 1 bis 12,
**gekennzeichnet durch** eine stirnseitig flachdichtende Ausbildung, wobei der Ventilstößel (32) auf der Kupplungsseite eine ebene, zur Steckachse (X) senkrechte Stirnfläche (88) aufweist, die in der entkuppelten Schließstellung etwa in einer Ebene mit einer konzentrischen Stirnfläche (90) des Ventilgehäuses (26) liegt.

14. Kupplungsstecker nach Anspruch 13,
**dadurch gekennzeichnet, dass** der Ventilstößel (32) im Anschluss an die ebene Stirnfläche (88) einen zylindrischen Dichtabschnitt (92) aufweist, der in der Schließstellung mit einem korrespondierenden Dichtbereich (94) des Ventilgehäuses (26) über eine Radialdichtung (96) zusammenwirkt.

## Claims

1. A coupling connector (2) of a pressure-medium plug-in coupling, consisting of two coupling parts (2, 4) capable of being interlocked and .having main valves (18, 20) automatically opening in an opposed manner during this, namely a coupling connector (2) on the pressure take-off side for insertion into a coupling sleeve (4) on the pressure transmitter side, with a coupling side (12) capable of being coupled to the coupling sleeve (4) and with an opposed line side (14), wherein in a closed position the main valve (18) closes a flow channel (22) towards the coupling side (12) in a pressure-tight manner off from a possible residual pressure (p) on the line side and in an opening position opens the flow channel (22), to which end the main valve (18) has a valve member (28) which co-operates with a valve seat (24) and which is guided axially movably in a valve housing (26) in a manner corresponding to an insertion axis (X) in such a way that during the coupling procedure the said valve member (28) is automatically moved out of the closed position into the opening position which is lifted off from the valve seat (24), **characterized in that** the valve member (28) is constructed in the form of a sleeve-shaped hollow body surrounding the flow channel (22) and with a thrust face (A) which in the closed position is capable of being acted upon axially by the residual pressure (p) in the direction of closure and which is made small in such a way that up to a maximum residual pressure (pₘₐₓ) of up to approximately 300 bar the valve member (28) is capable of being moved by manual coupling out of the closed position into the opening position against the respective residual pressure (p) and against a valve force (F) resulting from the latter by the stressing of the thrust face (A), wherein the valve member (28), with an outer peripheral face (36) sealed off by way of a peripheral seal (38), is guided in an inner guide face (40) of the valve housing (26), wherein a flow aperture (42) which is closed or opened by the valve member (28) in the manner of a slide is formed between the guide face (40) and the valve seat (24), and wherein the valve seat (24) is part of a guide element (48) which is arranged stationary in the valve housing (26) and in which a valve tappet (32) is guided in an axially displaceable manner in such a way that during the coupling procedure it is automatically pressed into the valve housing (26) and acts against the valve member (28) for opening purposes.

2. A coupling connector according to Claim 1, **characterized in that** the valve tappet (32) acts against the valve element (28) by way of a tappet pin (50) reduced in cross-section.

3. A coupling connector according to Claim 2, **characterized in that** in its interior the sleeve-shaped valve member (28) has an entrainment element (52) for abutment for the tappet pin (50).

4. A coupling connector according to Claim 3, **characterized in that** the entrainment element (52) is formed by a transverse pin extending diametrically.

5. A coupling connector according to any one of Claims 2 to 4, **characterized in that** the valve tappet (32) is guided, sealed off on the periphery, in a guide face (56) of the guide element (48), wherein the tappet pin (50) is movable, sealed off on the periphery, through an axial opening (60) in the guide element (48) beyond the region of the valve seat (24) towards the valve member (28).

6. A coupling connector according to any one of Claims 1 to 5, **characterized in that** the guide element (48) has a base portion (62) in the manner of a partition wall which is mounted, sealed off at both axial ends, in the valve housing (26) and which on the coupling side (12) merges into a portion (64) of the guide sleeve for the valve tappet (32) on the one hand and on the line side (14) has the valve seat (24) on the other hand.

7. A coupling connector according to Claim 6, **characterized in that** an annular channel is formed as part of the flow channel (22) radially between the portion (64) of the guide sleeve and the valve housing (26), wherein the base portion (62) has axial flow openings (66) for connecting between the annular channel and the valve flow aperture (42).

8. A coupling connector according to any one of Claims 1 to 7, **characterized in that** a return spring (68) is arranged in an inner chamber (70) formed between the valve tappet (32) and the guide element (48).

9. A coupling connector according to Claim 8, **characterized in that** the inner chamber (70) is connected to the atmosphere by way of at least one transverse opening (72) in the guide element (48) and a passage (74) in the valve housing (26).

10. A coupling connector according to any one of Claims 1 to 9, **characterized in that** the valve member (28) is acted upon by a closing spring (76) in the direction of closure.

11. A coupling connector according to any one of Claims 1 to 10, **characterized in that** on its side facing away from the valve seat (24) the valve member (28) has a sleeve portion (78) which is reduced in the external and internal diameter and which, sealed off on the periphery by way of a second peripheral seal (80), is guided in a second inner guide face (82) of the valve housing (26).

12. A coupling connector according to Claim 11, **characterized in that** an annular space (84), which surrounds the valve member (28) and which is connected to the atmosphere, is formed in the region situated axially between the first peripheral seal (38) of the valve member (28) and the second peripheral seal (80) of the sleeve portion (78).

13. A coupling connector according to any one of Claims 1 to 12, **characterized by** a design which seals in a flat manner at the end face, wherein on the coupling side the valve tappet (32) has a flat end face (88) which is at a right angle to the insertion axis (X) and which in the uncoupled closed position is situated substantially in one plane with a concentric end face (90) of the valve housing (26).

14. A coupling connector according to Claim 13, **characterized in that** adjoining the flat end face (88) the valve tappet (32) has a cylindrical sealing portion (92) which in the closed position co-operates with a corresponding sealing area (94) of the valve housing (26) by way of a radial seal (96).

## Revendications

1. Fiche d'accouplement (2) d'un accouplement enfichable à agent de pression, constituée de deux parties d'accouplement (2, 4) s'emboîtant ensemble et présentant des vannes principales (18, 20) s'ouvrant alors automatiquement de façon réciproque, à savoir fiche d'accouplement (2) côté récepteur de pression pour l'emboîtement dans un manchon d'accouplement (4) côté capteur de pression, avec un côté d'accouplement (12) pouvant être couplé avec le manchon d'accouplement (4) et un côté de conduite (14) opposé, la vanne principale (18) fermant dans une position de fermeture un canal d'écoulement (22) en direction du côté accouplement (12) étanche à la pression par rapport à une éventuelle pression résiduelle (p) côté conduite et ouvrant le canal d'écoulement (22) dans une position d'ouverture, la vanne principale (18) présentant un corps de soupape (28) coopérant avec un siège de soupape (24) et guidé en fonction d'un axe d'enfichage (X) de façon mobile axialement dans un boîtier de soupape (26) de telle sorte que ce corps de soupape est amené, lors de l'opération d'accouplement à partir de la position de fermeture, automatiquement dans la position d'ouverture soulevée du siège de soupape (24),
**caractérisée en ce que** le corps de soupape (28) est conçu sous forme d'un corps creux en forme de manchon, entourant le canal d'écoulement (22) avec une surface de pression (A) pouvant être sollicitée axialement dans la position de fermeture avec la pression résiduelle (p) et conçue petite de telle sorte que jusqu'à pression résiduelle (pₘₐₓ) maximale allant jusqu'à 300 bars, le corps de soupape (28) peut être amené par un accouplement manuel de la position de fermeture contre la pression résiduelle (p) respective et contre une force de soupape (F) en résultant par la sollicitation de la surface de pression (A) dans la position d'ouverture, le corps de soupape (28) étant rendu étanche avec une surface périphérique (36) extérieure par l'intermédiaire d'un joint périphérique (38) et étant guidé dans une surface de guidage (40) intérieure du boîtier de soupape (26), un passage d'écoulement (42) étant formé entre la surface de guidage (40) et le siège de soupape (24), lequel passage est fermé ou ouvert par le corps de soupape (28) à la façon d'un coulisseau, le siège de soupape (24) faisant partie d'un élément de guidage (48) disposé de façon fixe dans le boîtier de soupape (26), dans lequel un poussoir de soupape (32) est guidé de façon à pouvoir coulisser axialement de telle sorte qu'il est introduit lors de l'opération d'accouplement automatiquement dans le boîtier de soupape (26) et agit pour l'ouverture contre le corps de soupape (28).

2. Fiche d'accouplement selon la revendication 1,
**caractérisée en ce que** le poussoir de soupape (32) agit au moyen d'une broche de poussoir (50) réduite en section contre l'élément de soupape (28).

3. Fiche d'accouplement selon la revendication 2, **caractérisée en ce que** le corps de soupape (28) en forme de manchon présente dans son espace intérieur un élément entraîneur (52) pour l'appui pour la broche de poussoir (50).

4. Fiche d'accouplement selon la revendication 3,
**caractérisée en ce que** l'élément entraîneur (52) est formé par une broche transversale s'étendant diamétralement.

5. Fiche d'accouplement selon l'une quelconque des revendications 2 à 4,
**caractérisée en ce que** le poussoir de soupape (32), étanchéifié côté pourtour, est guidé dans une surface de guidage (56) de l'élément de guidage (48), la broche de poussoir (50), étanchéifiée côté pourtour, pouvant être déplacée à travers une ouverture (60) axiale de l'élément de guidage (48) au-delà de la zone du siège de soupape (24) contre le corps de soupape (28).

6. Fiche d'accouplement selon l'une quelconque des revendications 1 à 5,
**caractérisée en ce que** l'élément de guidage (48) présente une partie de base (62) en forme de paroi de séparation, étanche en direction des deux côtés axiaux dans le boîtier de soupape (26), laquelle d'une part fait place en direction du côté accouplement (12) à une partie de douille de guidage (64) pour le poussoir de soupape (32) et d'autre part présente le siège de soupape (24) en direction du côté conduite (14).

7. Fiche d'accouplement selon la revendication 6,
**caractérisée en ce que** un canal annulaire, en tant que partie du canal d'écoulement (22), est formé radialement entre la partie de manchon de guidage (64) et le boîtier de soupape (26), la partie de base (62) présentant des ouvertures d'écoulement (66) axiales pour la liaison entre le canal annulaire et le passage d'écoulement de soupape (42).

8. Fiche d'accouplement selon l'une quelconque des revendications 1 à 7,**caractérisée en ce qu'**un ressort de rappel (68) est disposé dans une chambre intérieure (70) formée entre le poussoir de soupape (32) et l'élément de guidage (48).

9. Fiche d'accouplement selon la revendication 8,
**caractérisée en ce que** la chambre intérieure (70) est reliée à l'atmosphère par au moins une ouverture transversale (72) de l'élément de guidage (48) et un passage (74) du boîtier de soupape (26).

10. Fiche d'accouplement selon l'une quelconque des revendications 1 à 9,
**caractérisée en ce que** le corps de soupape (28) est sollicité dans le sens de fermeture par un ressort de fermeture (76).

11. Fiche d'accouplement selon l'une quelconque des revendications 1 à 10,
**caractérisée en ce que** le corps de soupape (28) présente sur son côté partant du siège de soupape (24) une partie de douille (78) réduite dans le diamètre intérieur et le diamètre extérieur, qui est rendue étanche côté pourtour par un second joint périphérique (80) et guidée dans une seconde surface de guidage (82) intérieure du boîtier de soupape (26).

12. Fiche d'accouplement selon la revendication 11,
**caractérisée en ce qu'**un espace annulaire (84) entourant le corps de soupape (28), qui est relié à l'atmosphère, est formé dans la zone située axialement entre le premier joint périphérique (38) du corps de soupape (28) et le second joint périphérique (80) de la partie de douille (78).

13. Fiche d'accouplement selon l'une quelconque des revendications 1 à 12,
**caractérisée par** une réalisation assurant l'étanchéité à plat côté avant, le poussoir de soupape (32) présentant sur le côté accouplement une surface frontale (88) perpendiculaire à l'axe d'emboîtement (X), laquelle surface est située à peu près dans un plan avec une face frontale (90) concentrique du boîtier de soupape (26) dans la position de fermeture.

14. Accouplement selon la revendication 13,
**caractérisé en ce que** le poussoir de soupape (32) présente à la suite de la face frontale (88) plane une partie d'étanchéité (92) cylindrique qui coopère dans la position de fermeture avec une zone d'étanchéité (94) correspondante du boîtier de soupape (26) au moyen d'un joint radial (96).
